# EUROPEAN PATENT APPLICATION

(11) **EP 4 703 069 A1**
(43) Date of publication of application: **04.03.2026**
(21) Application number: 25185875.9
(22) Date of filing: 27.06.2025
(51) Int. Cl.: B22F 10/28, B33Y 10/00, B33Y 40/20, B33Y 70/00, B33Y 80/00, C21D 6/00, C22C 33/02, C22C 38/08, B23K 35/02, B23K 35/30, C21D 6/02, C22C 38/04, C22C 38/06, C22C 38/12, C22C 38/14, C22C 38/16, B22F 1/00

(54) **PRINTABLE DIE STEELS FOR ADDITIVE MANUFACTURING**

(30) Priority: 27.08.2024 US 202463687564 P
(71) Applicant: Massachusetts Institute Of Technology, Cambridge, MA 02139 (US); Universität Paderborn, 33098 Paderborn (DE)
(72) Inventor: Olson, Gregory B., Revere, 02151 (US); Hengsbach, Florian, 33104 Paderborn (DE); Schaper, Mirko, 33154 Salzkotten (DE)
(74) Representative: Michalski Hüttermann & Partner Patentanwälte mbB

(57) **Abstract**

A novel family of die steels is disclosed. This family of die steels is strengthened through the formation of M₂C precipitates and one or two additional precipitates, wherein M is one or more of chromium (Cr), vanadium (V), molybdenum(Mo) or tungsten (W) . These additional precipitates may include copper precipitates, NiAl precipitates, and Ni (Al₁₋ₓMnₓ) precipitates. This creates a steel having an acceptable hardness, as well as excellent thermal conductivity.

## Description

This application claims priority of U.S. Provisional Patent Application 63/687,564, filed August 27, 2024, the disclosure of which is incorporated herein by reference in its entirety.

### Statement of Government Support

This invention was made with government support under 70NANB19H005 awarded by the National Institute of Standards and Technology. The government has certain rights in the invention.

### Background

High-pressure die casting, injection molding, and press-hardening are primary shaping or secondary forming technologies for industrial mass production. In these processes, a mold including two die halves is machined to shape the components. The die half itself again is subdivided into several die inserts. The interior surfaces of these die inserts represent the part to be fabricated. The die halves are pressed together, and molten material is injected into the enclosed volume, or sheet material is formed. The injected or formed material is then cooled while within the mold. Once cooled, the die halves are separated so that the part may be removed.

The traditional process of creating a die insert is very time consuming. Furthermore, traditional processes limit the freedom of the design of the die insert.

Consequently, the use of additive manufacturing to fabricate these die inserts for high production processes is very attractive. Additive manufacturing allows a high degree of design freedom and is very cost effective for small quantities. For fabricating a metal component, laser powder bed fusion (LPBF) is typically used. The LPBF printing technique may be characterized as a multi-pass, micro-welding technique. Therefore, welding challenges exist when utilizing additive manufacturing. Conventional CrMoV-hot-working die steels (such as H10, H11, H13) possess a carbon content of approximately 0.25 wt.-% to 0.6 wt.-%, resulting in a poor weldability, and consequently, poor LPBF printability. Often, hot and cold cracking occurs using medium carbon CrMoV-hot working die steels for LPBF printing, particularly at industry relevant component sizes.

As a substitute for the conventional CrMoV die steels in the context of die insert LPBF-printing, low carbon and high Ni-containing maraging steels have been explored. These types of steel possess excellent printability. Specifically, their main strengthening mechanism is contributed by precipitation. However, unlike conventional CrMoV-die steels which rely on carbide precipitates, Ni-containing maraging steels utilize intermetallic Ni3Ti- and NiAl-type precipitates. However, these maraging steels possess a significant disadvantage: due to the high solid solution elements (mainly Ni 17 wt.-% and Co 10 wt.-%,) the thermal conductivity of the maraging steel is drastically reduced, potentially leading to increased thermal stresses at the die insert surface and finally premature failure. Moreover, aspects such as reverted austenite transformation, as well as erosion or sticking of Al-alloy melt, are problematic in the context of high pressure die casting.

Consequently, there is a great need to develop novel hot-working die steels that are tailored for additive manufacturing, and specifically, laser powder bed fusion. Additionally, it would be beneficial if this die steel had a thermal conductivity that allows prolonger operation and reduced cycle times in high pressure die casting and injection molding processes.

### Summary

A novel family of die steels is disclosed. This family of die steels is strengthened through the formation of M₂C precipitates and one or two additional precipitates, wherein M is one or more of chromium (Cr), vanadium (V), molybdenum(Mo) or tungsten (W) . These additional precipitates may include copper precipitates, NiAl precipitates, and Ni(Al₁₋ₓMnₓ) precipitates. This creates a steel having an acceptable hardness, as well as excellent thermal conductivity.

According to one embodiment, a method of producing a steel is disclosed. The method comprises forming a powder mixture comprising iron (Fe), carbon (C), nickel (Ni), aluminum (Al), and M, wherein M is one or more of chromium (Cr), vanadium (V), molybdenum (Mo), tungsten (W), tantalum (Ta), zirconium (Zr), or niobium (Nb); using laser powder bed fusion to heat the powder mixture to form the steel, wherein the steel comprises at least two precipitates, a first precipitate comprising M₂C; and a second precipitate comprising a nickel-aluminum (Ni-Al) rich precipitate. In some embodiments, a carbon weight percentage of the powder mixture is between 0.04% and 0.2%. In some embodiments, a nickel weight percentage of the powder mixture is less than 20%. In some embodiments, the powder mixture further comprises manganese (Mn) to facilitate formation of the second precipitate. In certain embodiments, the second precipitate comprises Ni(Al₁₋ₓMnₓ). In certain embodiments, a weight percentage of manganese and aluminum in the powder mixture is such that a combined atomic percentage of Mn and Al is equal to an atomic percentage of nickel.

In some embodiments, titanium and nitrogen are added during gas atomization of the powder mixture to allow precipitate strengthening. In some embodiments, a nitriding treatment is performed after the steel is formed to increase surface hardness by forming aluminum nitride at an outer surface.

In some embodiments, the powder mixture further comprises copper, and the steel comprises three precipitates, wherein a third precipitate comprises a copper rich precipitate. In certain embodiments, a weight percentage of the copper in the powder mixture is up to 15%. In some embodiments, the powder mixture further comprises manganese (Mn) to facilitate formation of the second precipitate. In certain embodiments, the second precipitate comprises Ni(Al₁₋ₓMnₓ). In certain embodiments, a weight percentage of manganese and aluminum in the powder mixture is such that a combined atomic percentage of Mn and Al is equal to an atomic percentage of nickel.

According to another embodiment, a steel made using laser powder bed fusion, is disclosed. The steel comprises iron; and two precipitates, wherein a first precipitate comprises M₂C, wherein M is one or more of chromium (Cr), vanadium (V), molybdenum (Mo), tungsten (W), tantalum (Ta), zirconium (Zr), or niobium (Nb); and a second precipitate comprises a nickel-aluminum (Ni-Al) rich precipitate. In some embodiments, a carbon weight percentage of the powder mixture is between 0.04% and 0.2%. In some embodiments, a nickel weight percentage of the powder mixture is less than 20%. In some embodiments, the steel further comprises manganese (Mn) to facilitate formation of the second precipitate. In certain embodiments, the second precipitate comprises Ni(Al₁₋ₓMnₓ).

According to another embodiment, a steel made using laser powder bed fusion is disclosed. The steel comprises iron; and three precipitates, wherein a first precipitate comprises M₂C, wherein M is one or more of chromium (Cr), vanadium (V), molybdenum (Mo), tungsten (W), tantalum (Ta), zirconium (Zr), or niobium (Nb); a second precipitate comprises a nickel-aluminum (Ni-Al) rich precipitate; and a third precipitate comprises a copper rich precipitate. In some embodiments, a carbon weight percentage of the powder mixture is between 0.04% and 0.2%. In some embodiments, a nickel weight percentage of the powder mixture is less than 20%. In some embodiments, the steel further comprises manganese (Mn) to facilitate formation of the second precipitate. In certain embodiments, the second precipitate comprises Ni(Al₁₋ₓMnₓ). In some embodiments, a copper weight percentage is less than 15%. In some embodiments, a thermal conductivity of the steel is greater than 35W/mK.

According to another embodiment, a powder mixture is disclosed. The powder mixture comprises iron (Fe); carbon (C); nickel (Ni); aluminum (Al); and M, wherein M is one or more of chromium (Cr), vanadium (V), molybdenum (Mo), tungsten (W), tantalum (Ta), zirconium (Zr), or niobium (Nb); wherein a carbon weight percentage of the powder mixture is between 0.04% and 0.2% and a nickel weight percentage of the powder mixture is less than 20%. In some embodiments, the powder mixture further comprises manganese (Mn). In certain embodiments, a weight percentage of manganese and aluminum in the powder mixture is such that a combined atomic percentage of Mn and Al is equal to an atomic percentage of nickel.

According to another embodiment, a powder mixture is disclosed. The powder mixture comprises iron (Fe); carbon (C); nickel (Ni); aluminum (Al); copper (Cu); and M, wherein M is one or more of chromium (Cr), vanadium (V), molybdenum (Mo), tungsten (W), tantalum (Ta), zirconium (Zr), or niobium (Nb); wherein a carbon weight percentage of the powder mixture is between 0.04% and 0.2%, a nickel weight percentage of the powder mixture is less than 20% and a copper weight percentage of the powder mixture is 15% or less. In some embodiments, the powder mixture further comprises manganese (Mn). In certain embodiments, a weight percentage of manganese and aluminum in the powder mixture is such that a combined atomic percentage of Mn and Al is equal to an atomic percentage of nickel.

### Brief Description of the Drawings

For a better understanding of the present disclosure, reference is made to the accompanying drawings, in which like elements are referenced with like numerals, and in which:
FIG. 1 shows a Graville diagram for determining susceptibility to HAZ cracking in plate steels;
FIG. 2 shows the crystal structure of the various precipitates;
FIG. 3 shows an exemplary die insert;
FIG. 4 shows a comparison of the present steel with other traditional steels;
FIG. 5 shows the ductility of the present steel;
FIG. 6 shows the thermal conductivity of the present steel with other traditional steels; and
FIG. 7 shows a transmission electron microscopy image of the present steel tempered at 550°C for 6 hours.

### Detailed Description

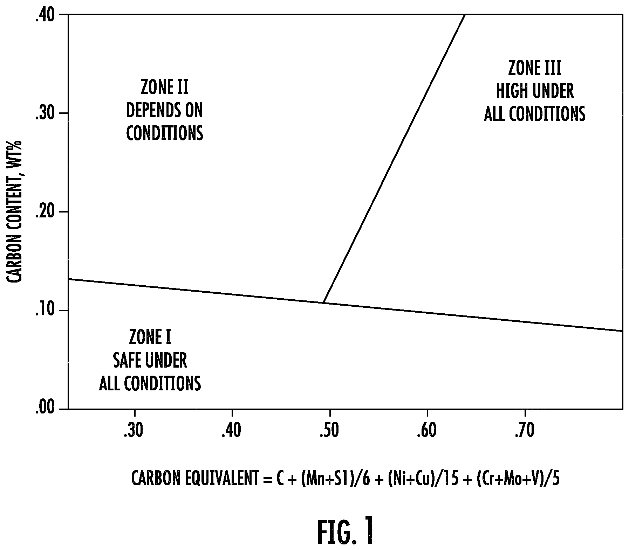

As noted above, additive manufacturing for metals typically utilizes a laser powder bed fusion (LPBF) process, which involves a plurality of micro-welds. Additionally, it is commonly known that to avoid welding issues, the maximum carbon content of the die steels should be about 0.2 wt-% or less. This is demonstrated in FIG. 1, which is a Graville diagram for determining susceptibility to heat affected zone (HAZ) cracking in plate steels. Thus, to create a die steel that may utilize the LPBF process, the amount of carbide strengthening is reduced compared to conventional CrMoV die steels. However, these metal carbides allow a major component of strengthening.

To compensate for this reduction in carbide strengthening, other precipitates, in addition to M₂C precipitates, are needed.

Thus, the present die steel utilizes intermetallic NiAl-rich precipitates. NiAl rich phases precipitate as B2-type or Heusler-phase. In order to promote the precipitation of NiAl phases, manganese can be added to form Ni(Al₁₋ₓMnₓ). Note that the composition of the die steel is such that Ni3Ti precipitates are not formed, as these precipitates lower the thermal conductivity of the material.

As a third strengthening precipitate, Cu-rich precipitates may be integrated to achieve the requisite hardness. The Cu-precipitates initially possess an BCC-crystal structure that later can transform to FCC.

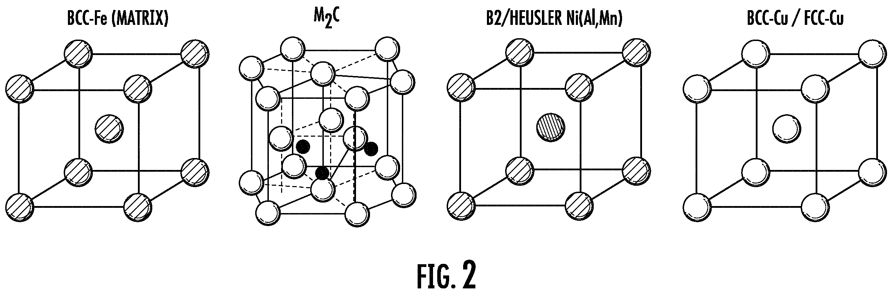

FIG. 2 shows the crystal structure of these various precipitates.

Thus, in some embodiments, the die steel includes M₂C and NiAl-rich precipitates, which may be NiAl or Ni(Al₁₋ₓMnₓ). In other embodiments, the die steel also includes Cu-rich precipitates. Furthermore, additional grain refiners, such as nitrides, oxides, carbides, and borides, may be added for additional strength, isotropic material behavior, and hot cracking prevention. Grain refiners may be added insitu during gas atomization (late-stage addition to the crucible, crucible atmosphere or via dispersing gas) or mechanical alloying or chemical surface modification.

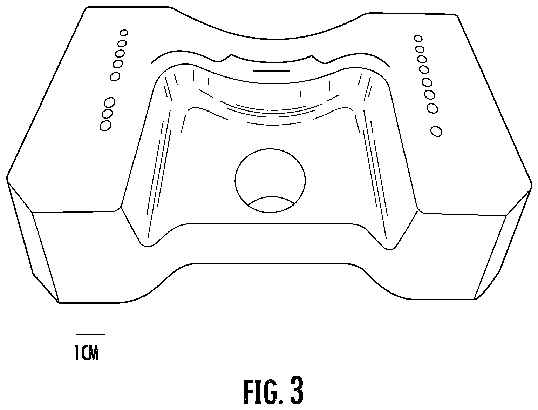

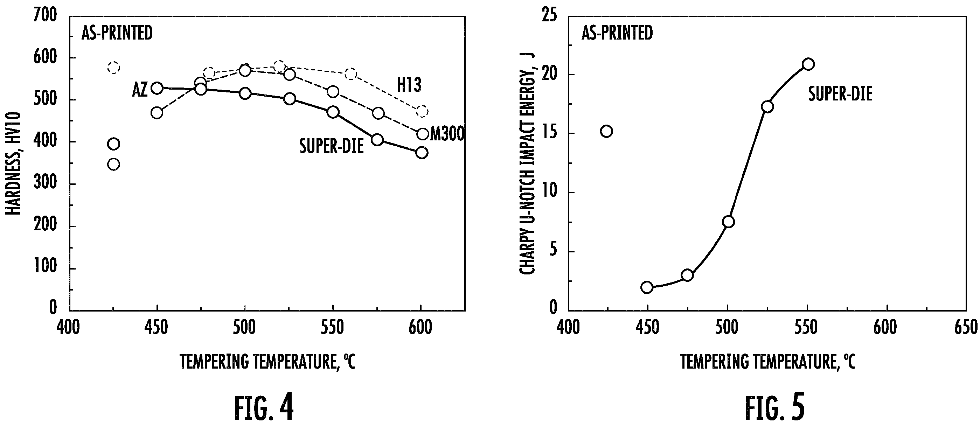

FIG. 3 shows a die insert created using LPBF printing with a composition of 0.10% C; 0.85% Mo; 1.6% W; 3.4% Cu; 0.85% Al; 1.50% Mn; 3.1% Ni; 0.35% Ti; and 0.1% N. Note that all percentages are expressed as weight percentages. This die is referred to as SuperDie in FIGs. 4-6.

In FIG. 4, the vertical axis shows the hardness of the die steel, as measured in Vickers. The horizontal axis shows the tempering temperature. This graph shows the performance of maraging steel (M300), CrMoV steel (H13) and the die steel shown in FIG. 3, which was fabricated using additive manufacturing. Note that while the hardness is slightly less than the maraging steel and the CrMoV steel at temperature above 475°C, the hardness of the present die steel is above 400 Vickers up to a tempering temperature of 550°C, which is typically acceptable for most applications.

FIG. 5 shows the Charpy impact energy of the present die steel, indicating excellent ductility of the material.

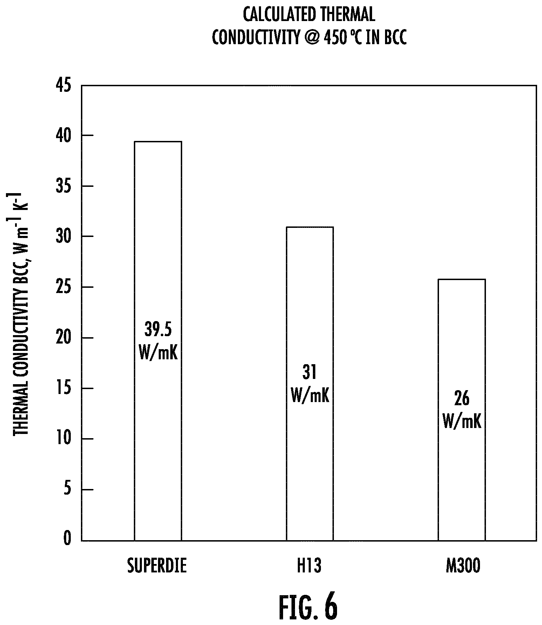

Further, FIG. 6 shows the thermal conductivity of these three die steels at 450°C. Note that the present die steel has a thermal conductivity that is nearly 9W/mK greater than CrMoV die steel and nearly 14 W/mK greater than maraging steel.

Compared to conventional die steels, the tempering resistance and peak hardness of the present die steel is reduced. Yet, the high thermal conductivity of the present die steel leads to reduced thermal stresses in high pressure die casting and injection molding applications.

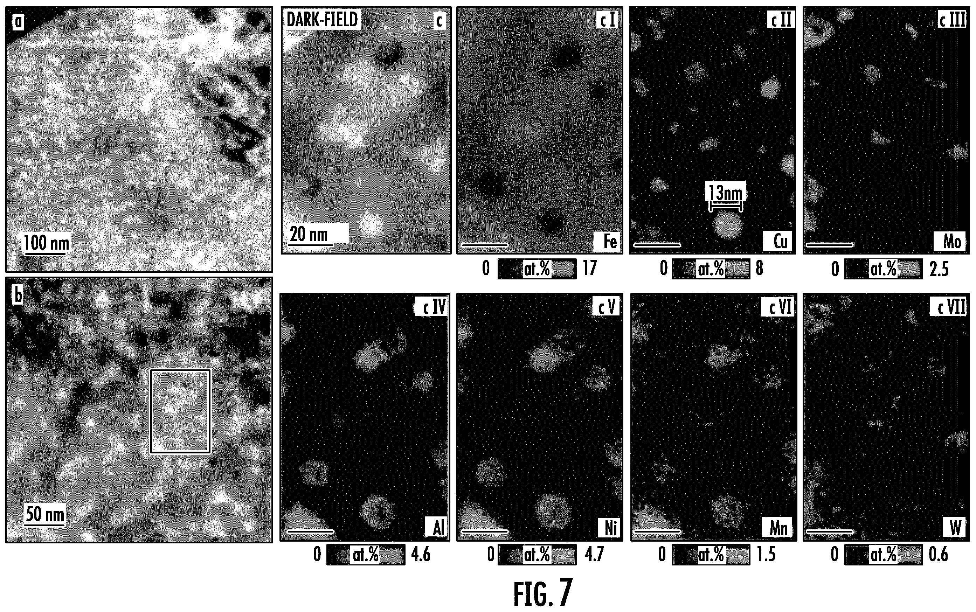

Using transmission electron microscopy, the present die steel was analyzed in the tempered condition (@550C for 6 hours). As shown in FIG. 7, the three precipitates may be identified via elemental mapping using energy-dispersive X-ray spectroscopy (EDS-mapping). The rod-shape precipitates correspond to M₂C carbides which correlates with the presence of Molybdenum and Tungsten enrichment and may be seen in images cIII and cVII, respectively. The spherical NiAlMn-precipitates may also be detected in images cIV, cV and cVI. Lastly, the Cu-precipitates can be identified as single precipitates or core-shell particles (see image cII) with the NiAlMn-precipitate as well as coprecipitate of the M₂C carbides.

While FIGs. 4-6 utilize a steel having a specific composition, the disclosure is not limited to this embodiment. Rather, the various elements may be present in a range of percentages.

For example, the amount of carbon may be maintained at between 0.04 wt-% and 0.2 wt-%. Consequently, the total amount of M is defined as being greater than twice the atomic percentage of carbon. In other words, if 0.2 wt-% of carbon results in a 0.40 at-% of the die steel, the total amount of M will be greater than 0.8 at-%. This is to ensure all carbon is transformed from brittle Fe₃C into M₂C.

In certain embodiments, M is one or more of chromium (Cr), vanadium (V), molybdenum (Mo) or tungsten (W). Alternatively, other transition elements such as tantalum, zirconium, and/or niobium may be used as the M material. Moreover, chromium may be added to increase the corrosion resistance of the die steel up to 13 wt.-%.

In addition, to maintain adequate thermal conductivity, the amount of nickel may be maintained at less than 20.0 wt-%. In other embodiments, the amount of nickel may be maintained at less than 10.0 wt-%.

Thus, in one embodiment, the die steel may be formed from a powder mixture having the following elements in the following amounts:
- Carbon (between 0.04 and 0.2 wt.-%);
- One or more of M (which is Cr, V, Mo, W) at more than twice the at.-% of carbon;
- Ni (1-20 wt.-%);
- Al (0.5-4.0 wt.-%) up to the at.-% of nickel; and
- The remainder as Fe.

This powder mixture is then subjected to a laser powder bed fusion additive manufacturing process to create the steel.

This die steel may be referred to as M₂C-NiAl die steel throughput this disclosure due to the two precipitates that are generated. With a nickel concentration of 20 wt-%, a thermal conductivity of 24W/mK may be achieved. At a nickel concentration of 10 wt-%, the thermal conductivity may be greater than 30W/mK.

Further, manganese (Mn) may be included in the powder mixture to facilitate the precipitation of NiAl during the welding process. In some embodiments, the amount of Mn may be approximately the same at.-% as aluminum. In other embodiments, the combined atomic percentages of manganese and aluminum may be equal to the atomic percentage of nickel. The addition of manganese results in a die steel having M₂C and Ni(Al₁₋ₓMnₓ) precipitates.

Further, in certain embodiments, a steel having three precipitates may be created. In this embodiment, to increase the thermal conductivity, copper may be added to the powder mixture, at levels up to 15.0 wt-%. This allows the die steel to achieve a thermal conductivity of greater than 35W/mK. Note that copper may be added to a powder mixture that includes manganese or does not include manganese. Note that when copper is added, the amount of aluminum, nickel and manganese may be reduced, as the copper precipitates serve to increase both thermal conductivity and strength.

In addition, to allow precipitate strengthening and grain refinement, the insitu-precipitation of titanium-nitrides (TiN) during gas atomization of the powder mixture may be included, leading to a grain refinement in the LPBF-printed die steels. Thus, titanium and nitrogen may also be added to the powder mixture during gas atomization, if desired. The amount of titanium and nitrogen may be up to 5 wt-%. In other embodiments, the amounts may be much less, such as less than 2 wt-%. Alternatively or additionally, different grain refiners, such as other nitrides, oxides, carbides or borides may be used.

Additionally, after formation, the present die steel may undergo a nitriding treatment to increase the surface hardness by aluminum-nitrides (AlN). The nitrogen bonds with aluminum near the surface of the die to create aluminum nitrides. While the depth of these aluminum nitrides may be relatively shallow, the increase in surface hardness helps reduce erosion and wear during high pressure die casting and injection molding applications.

The present system has many advantages. The steel described herein may be made using LPBF process, allowing lower cost creation of die casts. Note that in other embodiments, other additive manufacturing processes such as wire arc manufacturing, electron beam melting or binder jetting may be used with this powder. Further, when all three precipitates are included, the thermal conductivity may be 35W/mK or more, which far exceeds that achieved by maraging steel of CrMoV steel.

The present disclosure is not to be limited in scope by the specific embodiments described herein. Indeed, other various embodiments of and modifications to the present disclosure, in addition to those described herein, will be apparent to those of ordinary skill in the art from the foregoing description and accompanying drawings. Thus, such other embodiments and modifications are intended to fall within the scope of the present disclosure. Further, although the present disclosure has been described herein in the context of a particular implementation in a particular environment for a particular purpose, those of ordinary skill in the art will recognize that its usefulness is not limited thereto and that the present disclosure may be beneficially implemented in any number of environments for any number of purposes. Accordingly, the claims set forth below should be construed in view of the full breadth and spirit of the present disclosure as described herein.

## Claims

1. A method of producing a steel, comprising:
forming a powder mixture comprising iron (Fe), carbon (C), nickel (Ni), aluminum (Al), and M, wherein M is one or more of chromium (Cr), vanadium (V), molybdenum (Mo), tungsten (W), tantalum (Ta), zirconium (Zr), or niobium (Nb);
using laser powder bed fusion to heat the powder mixture to form the steel, wherein the steel comprises at least two precipitates,
a first precipitate comprising M₂C; and
a second precipitate comprising a nickel-aluminum (Ni-Al) rich precipitate.

2. The method of claim 1, wherein a carbon weight percentage of the powder mixture is between 0.04% and 0.2%.

3. The method of claim 1, wherein a nickel weight percentage of the powder mixture is less than 20%.

4. The method of claim 1, wherein the powder mixture further comprises manganese (Mn) to facilitate formation of the second precipitate, and wherein the second precipitate comprises Ni(Al₁₋ₓMnₓ).

5. The method of claim 4, wherein a weight percentage of manganese and aluminum in the powder mixture is such that a combined atomic percentage of Mn and Al is equal to an atomic percentage of nickel.

6. The method of claim 1, where titanium and nitrogen are added during gas atomization of the powder mixture to allow precipitate strengthening.

7. The method of claim 1, wherein a nitriding treatment is performed after the steel is formed to increase surface hardness by forming aluminum nitride at an outer surface.

8. The method of claim 1, wherein the powder mixture further comprises copper, and the steel comprises three precipitates, wherein a third precipitate comprises a copper rich precipitate.

9. The method of claim 8, wherein a weight percentage of the copper in the powder mixture is up to 15%.

10. The method of claim 8, wherein the powder mixture further comprises manganese (Mn) to facilitate formation of the second precipitate and wherein the second precipitate comprises Ni(Al₁₋ₓMnₓ) .

11. The method of claim 10, wherein a weight percentage of manganese and aluminum in the powder mixture is such that a combined atomic percentage of Mn and Al is equal to an atomic percentage of nickel.

12. The steel produced using the method of any of claims 1-11.

13. A powder mixture, suitable for laser powder bed fusion, comprising:
iron (Fe);
carbon (C);
nickel (Ni);
aluminum (Al); and
M, wherein M is one or more of chromium (Cr), vanadium (V), molybdenum (Mo), tungsten (W), tantalum (Ta), zirconium (Zr), or niobium (Nb);
wherein a carbon weight percentage of the powder mixture is between 0.04% and 0.2% and a nickel weight percentage of the powder mixture is less than 20%.

14. The powder mixture of claim 13, further comprising manganese (Mn).

15. The powder mixture of claim 14, wherein a weight percentage of manganese and aluminum in the powder mixture is such that a combined atomic percentage of Mn and Al is equal to an atomic percentage of nickel.

16. The powder mixture of claim 13, further comprising:
copper (Cu);
wherein a copper weight percentage of the powder mixture is 15% or less.
